# EUROPEAN PATENT APPLICATION

(11) **EP 4 615 043 A1**
(43) Date of publication of application: **10.09.2025**
(21) Application number: 23884588.7
(22) Date of filing: 16.10.2023
(51) Int. Cl.: H04W 24/10, H04W 36/00

(54) **CONFIGURATION METHOD AND APPARATUS FOR RADIO RESOURCE MANAGEMENT (RRM) MEASUREMENT**

(30) Priority: 04.11.2022 CN 202211379994
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN); LIANG, Jing, Beijing 100085 (CN)
(74) Representative: Studio Torta S.p.A.
(86) International application number: PCT/CN2023/124730
(87) International publication number: WO 2024/093656

(57) **Abstract**

The embodiments of the present disclosure provide a configuration method and apparatus for radio resource management (RRM) measurement. The method comprises: receiving RRM configuration information of a first layer 1 (L1)/layer 2 (L2)-triggered mobility (LTM) candidate cell that is sent by a network side; and on the basis of the RRM configuration information of the first LTM candidate cell and/or first RRM measurement configuration information, determining RRM configuration information of a second LTM candidate cell, wherein the RRM configuration information of the second LTM candidate cell is used by a terminal to perform RRM measurement in a target candidate cell on the basis of LTM.

## Description

### CROSS-REFERENCES TO RELATED APPLICATIONS

The present application claims priority to Chinese Patent Application No. 202211379994.3 filed on November 04, 2022, entitled "Configuration Method and Apparatus for Radio Resource Management (RRM) Measurement", which is hereby incorporated by reference in its entirety.

### FIELD

The present application relates to the field of communications, and in particular, to methods and apparatuses for configuring radio resource management (RRM) measurement.

### BACKGROUND

In the related art, layer 1/layer 2 (L1/L2)-triggered mobility (LTM) is discussed, which refers to the network pre-configuring multiple candidate cells and configuration information thereof for a terminal. The network may transmit an L1/L2 mobility command (L1/L2 instruction) to user equipment (UE) to switch a current serving cell to another cell (a configured candidate cell), that is, to perform cell switch.

However, there is currently no corresponding solution of how to configure radio resource management (RRM) measurement configuration information for LTM candidate cells.

### BRIEF SUMMARY

The embodiments of the present application provide methods and apparatuses for configuring radio resource management (RRM) measurement, which solve the deficiency of the lack of solution for configuring RRM measurement configuration information for LTM candidate cells in the related art, and enable the terminal to perform RRM measurement and report in a target candidate cell after executing L1/L2 mobility command to access the target candidate cell.

Embodiments of the present application provide a method for configuring radio resource management (RRM) measurement, performed by a terminal, including:
receiving RRM configuration information of a first layer 1/layer 2 (L1/L2)-triggered mobility (LTM) candidate cell transmitted from a network side; and
determining, based on the RRM configuration information of the first LTM candidate cell and/or first RRM measurement configuration information, RRM configuration information of a second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, determining, based on the RRM configuration information of the first LTM candidate cell and/or first RRM measurement configuration information, the RRM configuration information of the second LTM candidate cell includes:
determining, based on the RRM configuration information of the first LTM candidate cell, RRM measurement configuration information of a current serving cell as the RRM configuration information of the second LTM candidate cell; or
updating, based on the RRM configuration information of the first LTM candidate cell, RRM measurement configuration information of a current serving cell to obtain the RRM configuration information of the second LTM candidate cell; or
generating, based on the RRM configuration information of the first LTM candidate cell and the reference RRM measurement configuration information, the RRM configuration information of the second LTM candidate cell; or
determining, based on the RRM configuration information of the first LTM candidate cell, the RRM configuration information of the second LTM candidate cell in the RRM measurement configuration pool.

In an embodiment, in case of updating, based on the RRM configuration information of the first LTM candidate cell, the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information;
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, generating, based on the RRM configuration information of the first LTM candidate cell and the reference RRM measurement configuration information, the RRM configuration information of the second LTM candidate cell includes:
generating, based on a delta configuration parameter in the RRM configuration information of the first LTM candidate cell and the reference RRM measurement configuration information, the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, first LTM candidate cell configuration information includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In an embodiment, before determining the RRM configuration information of the second LTM candidate cell, the method further includes:
receiving the first RRM measurement configuration information transmitted from the network side.

Embodiments of the present application provide a method for configuring radio resource management (RRM) measurement, performed by network side, including:
transmitting, to a terminal, RRM configuration information of a first layer 1/layer 2 (L1/L2)-triggered mobility (LTM) candidate cell and/or first RRM measurement configuration information,
where the RRM configuration information of the first LTM candidate cell and/or the first RRM measurement configuration information is used for the terminal to determine RRM configuration information of the second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

In an embodiment, in case that the RRM configuration information of the first LTM candidate cell is used to modify the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the RRM configuration information of the first LTM candidate cell includes a delta configuration parameter for generating the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, the first LTM candidate cell configuration information used to determine the RRM configuration information of the second LTM candidate cell in the RRM measurement configuration pool includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

Embodiments of the present application further provide an apparatus for configuring radio resource management (RRM) measurement, for use in a terminal, including:
a first receiving unit, used for receiving RRM configuration information of a first layer 1/layer 2 (L1/L2)-triggered mobility (LTM) candidate cell transmitted from a network side; and
a first determining unit, used for determining, based on the RRM configuration information of the first LTM candidate cell and/or first RRM measurement configuration information, RRM configuration information of a second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, the first determining unit is used for determining, based on the RRM configuration information of the first LTM candidate cell, RRM measurement configuration information of a current serving cell as the RRM configuration information of the second LTM candidate cell; or
the first determining unit is used for updating, based on the RRM configuration information of the first LTM candidate cell, RRM measurement configuration information of a current serving cell to obtain the RRM configuration information of the second LTM candidate cell; or
the first determining unit is used for generating, based on the RRM configuration information of the first LTM candidate cell and the reference RRM measurement configuration information, the RRM configuration information of the second LTM candidate cell; or
the first determining unit is used for determining, based on the RRM configuration information of the first LTM candidate cell, the RRM configuration information of the second LTM candidate cell in the RRM measurement configuration pool.

In an embodiment, in case that the first determining unit is used for updating, based on the RRM configuration information of the first LTM candidate cell, the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the first determining unit is used for generating, based on a delta configuration parameter in the RRM configuration information of the first LTM candidate cell and the reference RRM measurement configuration information, the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, first LTM candidate cell configuration information includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In an embodiment, the first receiving unit is further used for:
receiving the first RRM measurement configuration information transmitted from the network side.

Embodiments of the present application further provide an apparatus for configuring radio resource management (RRM) measurement, for use in network side, including:
a second transmitting unit, used for transmitting, to a terminal, RRM configuration information of a first layer 1/layer 2 (L1/L2)-triggered mobility (LTM) candidate cell and/or first RRM measurement configuration information,
where the RRM configuration information of the first LTM candidate cell and/or the first RRM measurement configuration information is used for the terminal to determine RRM configuration information of the second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

In an embodiment, in case that the RRM configuration information of the first LTM candidate cell is used to modify the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the RRM configuration information of the first LTM candidate cell includes a delta configuration parameter for generating the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, the first LTM candidate cell configuration information used to determine the RRM configuration information of the second LTM candidate cell in the RRM measurement configuration pool includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

Embodiments of the present application further provide a terminal, including a memory, a transceiver, and a processor, where
the memory is used for storing a computer program; the transceiver is used for receiving and transmitting data under control of the processor; the processor is used for reading the computer program in the memory and performing the method for configuring radio resource management (RRM) measurement as described above performed by the terminal.

Embodiments of the present application further provide a network device, including a memory, a transceiver, and a processor, where
the memory is used for storing a computer program; the transceiver is used for receiving and transmitting data under control of the processor; the processor is used for reading the computer program in the memory and performing the method for configuring radio resource management (RRM) measurement as described above performed by network side.

Embodiments of the present application further provide a processor-readable storage medium storing a computer program, where the computer program is used to cause a processor to perform the methods for configuring radio resource management (RRM) measurement as described above.

In the methods and apparatuses for configuring RRM measurement provided in the embodiments of the present application, network side configuration information through the RRM configuration information of the first LTM candidate cell may be obtained to determine the RRM configuration information of the second LTM candidate cell, that is, the RRM measurement configuration information corresponding to each candidate cell in the LTM scenario. In case that the terminal executes the L1/L2 mobility command to access the target candidate cell, the terminal may perform RRM measurement and reporting in the target candidate cell based on the RRM measurement configuration information corresponding to the target candidate cell in the RRM configuration information of the second LTM candidate cell

### BRIEF DESCRIPTION OF THE DRAWINGS

To illustrate solutions in the embodiments of the present application more clearly, the drawings used in the descriptions of the embodiments are briefly described below. The drawings in the following description are some embodiments of the present application, and other drawings may be obtained based on these drawings without any creative effort for those skilled in the art.
FIG. 1 is a first schematic flowchart of a method for configuring radio resource management (RRM) measurement according to an embodiment of the present application;
FIG. 2 is a second schematic flowchart of a method for configuring radio resource management (RRM) measurement according to an embodiment of the present application;
FIG. 3 is a first schematic structural diagram of an apparatus for configuring radio resource management (RRM) measurement according to an embodiment of the present application;
FIG. 4 is a second schematic structural diagram of an apparatus for configuring radio resource management (RRM) measurement according to an embodiment of the present application;
FIG. 5 is a schematic structural diagram of a terminal according to an embodiment of the present application; and
FIG. 6 is a schematic structural diagram of a network device according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

Solutions in the embodiments of the present application are described below clearly and completely in conjunction with the accompanying drawings. These embodiments are a part of the embodiments of the present application, and not all of the embodiments. All other embodiments obtained by those skilled in the art based on the embodiments of the present application without creative effort are within the scope of the present application.

The solutions according to the embodiments of the present application may be applicable to various systems, especially a 5^{th} Generation Mobile Communication Technology (5G) system. For example, applicable systems may be a global system of mobile communication (GSM) system, a code division multiple access (CDMA) system, a wideband code division multiple access (WCDMA), a general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing device connected to a wireless modem. In different systems, names of the terminal device may be different. For example, in the 5G system, the terminal device may be called as a user equipment (UE). A wireless terminal device may communicate with one or more core networks (CNs) via a radio access network (RAN), and the radio terminal device may be a mobile terminal, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

For the convenience of understanding the embodiments of the present application, terms or backgrounds related to the embodiments of the present application are introduced below.

### (1) Layer 1/layer 2 (L1/L2) mobility, also known as L1/L2-triggered mobility (LTM)

In the related art, L1/L2 mobility is discussed in which a network pre-configures multiple candidate cells and configuration information thereof for a user equipment (UE). The network may transmit an L1/L2 mobility command (L1/L2 instruction) to the UE to switch a current serving cell to another cell (a target cell), and the target cell is a candidate cell of a certain configuration among multiple candidate cells configured by the network for the terminal, that is, to perform cell switch.

### (2) Radio resource management (RRM) measurement

The network may configure an RRM measurement for UE in connected state, the RRM measurement configuration includes: measurement identifier (ID), measurement object, and reporting configuration. One measurement ID links one measurement object to one reporting configuration. UE performs a layer 3 (L3) measurement based on RRM measurement configuration configured by the network and reports a measurement result to the network. The measurement results may include a cell specific measurement result and a beam specific measurement result. The network uses the L3 measurement result to make an L3 mobility decision.

Solutions in the embodiments of the present application are described below clearly and completely in conjunction with the accompanying drawings. These embodiments are a part of the embodiments of the present application, and not all of the embodiments. All other embodiments obtained by those skilled in the art based on the embodiments of the present application without creative effort are within the scope of the present application.

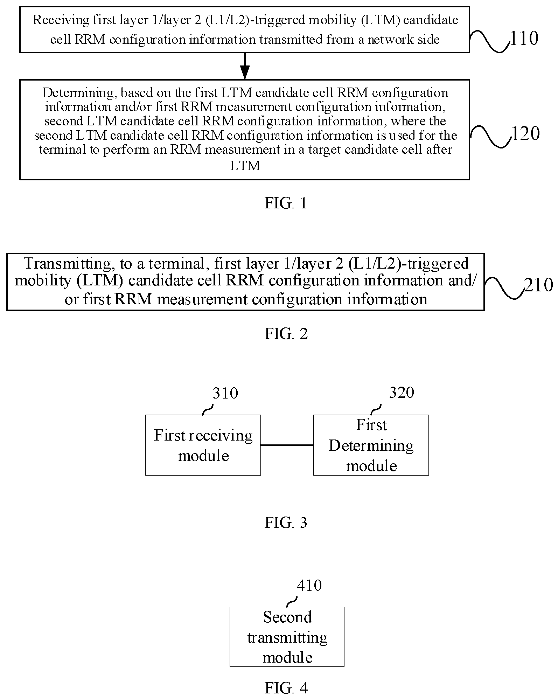

FIG. 1 is a first schematic flowchart of a method for configuring radio resource management (RRM) measurement according to an embodiment of the present application. As shown in FIG. 1, an embodiment of the present application provides a method for configuring RRM measurement performed by a terminal, including the following steps.

Step 110: receiving RRM configuration information of a first layer 1/layer 2 (L1/L2)-triggered mobility (LTM) candidate cell transmitted from a network side.

In an embodiment, LTM candidate cells refer to cells that the terminal may select when executing LTM commands in the LTM scenario. The RRM configuration information of a first layer 1/layer 2 (L1/L2)-triggered mobility (LTM) candidate cell, is hereinafter referred to as the RRM configuration information of the first LTM candidate cell . The RRM configuration information of the first LTM candidate cell is used to configure RRM configuration information of the second LTM candidate cell .

In an embodiment, the RRM configuration information of the first LTM candidate cell is information configured for RRM measurement of the candidate cells by the network side, which may be common shared configuration information. Or, a set of RRM configuration information of the first LTM candidate cell may be configured separately for each LTM candidate cell. The RRM configuration information of the first LTM candidate cell may be combined with other information to determine RRM configuration information of the second LTM candidate cell .

Step 120: determining, based on the RRM configuration information of the first LTM candidate cell and/or first RRM measurement configuration information, RRM configuration information of a second LTM candidate cell, where the RRM configuration information of the second LTM candidate cell is used for the terminal to perform an RRM measurement in a target candidate cell based on LTM.

In an embodiment, the first LTM RRM measurement configuration information and the second LTM RRM measurement configuration information may be configured for each candidate cell.

The first RRM measurement configuration information may not be separately configured for each LTM candidate cell, but a set of configurations shared by all LTM candidate cells; the first RRM measurement configuration information may be transmitted from the network side, provided by the protocol, or stored by the terminal through other means. How the terminal obtains the first RRM measurement configuration information is not limited in embodiments of the present application.

For determining, based on the RRM configuration information of the first LTM candidate cell and/or first RRM measurement configuration information, RRM configuration information of a second LTM candidate cell, there may be following implementations.

In a possible implementation, the RRM configuration information of the first LTM candidate cell includes indication information that indicates the terminal to use the RRM measurement configuration information of the current serving cell as the RRM measurement configuration information used by the terminal for the target candidate cell. The indication information may be shared indication information that applies to all LTM candidate cells, or may be indication information per LTM candidate cell.

In a possible implementation, the RRM configuration information of the first LTM candidate cell includes RRM configuration information corresponding to each LTM candidate cell, and the terminal may directly use the RRM configuration information of the first LTM candidate cell as the RRM configuration information of the second LTM candidate cell .

In a possible implementation, the RRM configuration information of the first LTM candidate cell is configured with a latest parameter (which may be some or all parameters), and the RRM configuration information of the current serving cell is updated to obtain the RRM configuration information of the second LTM candidate cell .

In a possible implementation, the first RRM measurement configuration information includes multiple pieces of measurement configuration sub-information, and the RRM configuration information of the first LTM candidate cell may indicate, in the first RRM measurement configuration information, information required for the RRM configuration information of the second LTM candidate cell to obtain the RRM configuration information of the second LTM candidate cell .

In a possible implementation, the RRM configuration information of the first LTM candidate cell may include a delta configuration parameter, in combination with the first RRM measurement configuration information to obtain the RRM configuration information of the second LTM candidate cell .

The present application further provides various embodiments, which may be referred to the following. It should be understood that the above embodiments are provided for the convenience of understanding the present application and should not be any limitation to the present application.

The RRM configuration information of the second LTM candidate cell is complete and independent configuration information configured for each LTM candidate cell. The RRM configuration information of the second LTM candidate cell may include configuration information such as a measurement identifier (ID), a measurement object, and a measurement reporting. The terminal may perform RRM measurement and reporting in the corresponding cell through the RRM configuration information of the second LTM candidate cell .

The target candidate cell is the cell to which the terminal changes after the terminal executes the LTM command, and the target candidate cell belongs to the LTM candidate cells.

In an embodiment, if the terminal determines the RRM configuration information of the second LTM candidate cell, then the terminal may directly perform RRM measurement after executing the LTM command; the embodiments of the present application does not limit the order of determining the RRM configuration information of the second LTM candidate cell and executing the LTM command, as long as RRM measurement is performed using the RRM configuration information of the second LTM candidate cell in the target candidate cell after the LTM command is executed.

For example, there are LTM candidate cells cell1, cell2, and cell3. The RRM configuration information of the second LTM candidate cell includes the RRM configuration information corresponding to each LTM candidate cell, that is, the RRM configuration information of the second LTM candidate cell includes:
RRM configuration information corresponding to cell1;
RRM configuration information corresponding to cell2; and
RRM configuration information corresponding to cell3.

The service cell before the terminal executes the LTM command is cell0. After executing the LTM command, the current service cell may be switched to any of cell1, cell2, or cell3. If the terminal switches the current serving cell to cell2, then cell2 is the target candidate cell. After switch, based on the RRM configuration information of the second LTM candidate cell determined by the terminal, and the RRM configuration information corresponding to cell2 included in the RRM configuration information of the second LTM candidate cell, the terminal may directly perform RRM measurement in the target candidate cell cell2.

In the method for configuring RRM measurement provided in the embodiments of the present application, network side configuration information may be obtained through the RRM configuration information of the first LTM candidate cell to determine the RRM configuration information of the second LTM candidate cell, that is, the RRM measurement configuration information corresponding to each candidate cell in the LTM scenario. After the terminal executes the L1/L2 mobility command to access the target candidate cell, based on the RRM measurement configuration information corresponding to the target candidate cell in the RRM configuration information of the second LTM candidate cell, the terminal may perform RRM measurement and report in the target candidate cell. Moreover, the terminal determines the RRM configuration information of the second LTM candidate cell, which allows the terminal to directly perform RRM measurement in the target candidate cell after the cell switch, without waiting for the network to issue the configuration, which reduces latency.

In an embodiment, the first RRM measurement configuration information includes any of the following:
reference RRM measurement configuration information; or
an RRM measurement configuration pool.

The reference RRM measurement configuration information refers to the RRM measurement configuration information used for reference, and the reference RRM measurement configuration information may be modified to obtain the RRM configuration information of the second LTM candidate cell . The reference RRM measurement configuration information may be the RRM measurement configuration information of the current serving cell, historical RRM measurement configuration information, etc. transmitted from the network side, provided by the protocol, or stored by the terminal.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

The fixed RRM measurement configuration information transmitted from the network side may be RRM measurement configuration information with a fixed configuration parameter transmitted from the network side to the terminal. The fixed RRM measurement configuration may be separately configured by the network. The fixed RRM measurement configuration information may include measurement object configuration, reporting configuration, measurement ID configuration, measurement gap configuration, and other information.

It should be understood that the terminal may continuously update the RRM measurement configuration information of the current serving cell. Therefore, the RRM measurement configuration information of a current serving cell when the terminal receives the RRM configuration information of the first LTM candidate cell refers to the RRM measurement configuration information of the current serving cell obtained by the terminal when receiving the RRM configuration information of the first LTM candidate cell . The terminal uses the RRM measurement configuration information of the current serving cell when receiving the RRM configuration information of the first LTM candidate cell as the reference RRM measurement configuration information. It should be understood that the terminal does not continue to update the RRM measurement configuration information of the current serving cell as the reference RRM measurement configuration information.

In an embodiment, the RRM measurement configuration information of the current serving cell is stored in table format, and the RRM measurement configuration information of the current serving cell is stored as Table 1. When receiving the RRM configuration information of the first LTM candidate cell, the terminal may obtain Table 2 identical to Table 1 at the current time. The terminal may take Table 2 as the reference RRM measurement configuration information, and the content of Table 2 no longer switches. The terminal may continue to maintain Table 1. It should be understood that the above examples are provided for the convenience of understanding the present application and should not be any limitation to the present application.

The RRM measurement configuration pool refers to an information set that includes multiple pieces of information. The RRM measurement configuration pool may include at least one configuration parameter type, with each configuration parameter type corresponding to at least one parameter value. Multiple configuration parameter types, namely the parameter value corresponding to each type of configuration parameter, may constitute complete RRM measurement configuration information.

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, determining, based on the RRM configuration information of the first LTM candidate cell and/or first RRM measurement configuration information, the RRM configuration information of the second LTM candidate cell includes:
determining, based on the RRM configuration information of the first LTM candidate cell, RRM measurement configuration information of a current serving cell as the RRM configuration information of the second LTM candidate cell; or
updating, based on the RRM configuration information of the first LTM candidate cell, RRM measurement configuration information of a current serving cell to obtain the RRM configuration information of the second LTM candidate cell; or
generating, based on the RRM configuration information of the first LTM candidate cell and the reference RRM measurement configuration information, the RRM configuration information of the second LTM candidate cell; or
determining, based on the RRM configuration information of the first LTM candidate cell, the RRM configuration information of the second LTM candidate cell in the RRM measurement configuration pool.

In an embodiment, for determining, based on the RRM configuration information of the first LTM candidate cell, RRM measurement configuration information of a current serving cell as the RRM configuration information of the second LTM candidate cell, the RRM measurement configuration information of the current serving cell refers to the RRM measurement configuration information of the current serving cell that the terminal is maintaining (which may be understood as Table 1 above). That is, the RRM measurement configuration information of the current serving cell is the latest. The RRM configuration information of the first LTM candidate cell may indicate whether the RRM configuration information of the current serving cell may continue to be used. That is, the RRM measurement configuration information of the first LTM candidate cell may be used to indicate whether the RRM measurement configuration information of the current serving cell is the RRM configuration information of the second LTM candidate cell . In case that the RRM configuration information of the first LTM candidate cell indicates that the RRM measurement configuration information of the current serving cell may continue to be used, the RRM measurement configuration information of the current serving cell is determined as the RRM configuration information of the second LTM candidate cell .

In an embodiment, the RRM configuration information of the first LTM candidate cell may be an indicator or a 1-bit indicator bit, etc.

In the method for configuring RRM measurement provided in the embodiments of the present application, the RRM measurement configuration information of the current serving cell may be directly determined as the RRM configuration information of the second LTM candidate cell in case that the RRM measurement configuration information of the current serving cell may continue to be used, and the network side does not need to issue new RRM measurement configuration information, which saves signaling resources.

For updating, based on the RRM configuration information of the first LTM candidate cell, RRM measurement configuration information of a current serving cell to obtain the RRM configuration information of the second LTM candidate cell, the RRM configuration information of the first LTM candidate cell may carry parameters that need to be switched, such as a parameter type and a corresponding parameter value. The terminal updates the parameters in the RRM measurement configuration information of the current serving cell based on the parameters that need to be switched to obtain the RRM configuration information of the second LTM candidate cell .

In an embodiment, the parameters that need to be switched carried in the RRM configuration information of the first LTM candidate cell may be configured by the network side based on actual needs. It should be understood that the parameters that need to be switched may be flexibly configured based on the actual situation.

In an embodiment, in case of updating, based on the RRM configuration information of the first LTM candidate cell, the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information;
inter-frequency gap configuration information;
measurement ID identification information, which may be identification information for adding/modifying/releasing a certain measurement ID;
measurement ID operation indication information, which may be operation indication information for a certain measurement ID, and the operation indication information may be used to add, modify, or release the measurement ID;
a measurement ID parameter value, which may be a specific parameter value for adding/modifying the measurement ID and one or more parameter values may be added/modified;
measurement object identification information, which may be identification information for adding/modifying/releasing a measurement object;
measurement object operation indication information, which may be operation indication information for a certain measurement object, and the operation indication information may be used to add, modify, or release the measurement object;
a measurement object parameter value, which may be a specific parameter value for adding/modifying the measurement object, and one or more parameter values may be added/modified;
reporting configuration identification information, which may be identification information for adding/modifying/releasing a certain reporting configuration;
reporting configuration operation indication information, which may be operation indication information for a certain reporting configuration, and the operation indication information may be used to add, modify, or release the reporting configuration; or
a reporting configuration parameter value, which may be a specific parameter value for adding/modifying the reporting configuration, and one or more parameter values may be added/modified.

For example, the parameters that need to be switched may include:
identification information of a candidate cell;
a measurement gap configuration;
a threshold for NR SpCell RSRP measurement, which is used to control when a terminal is required to perform measurements on non-serving cells, and for example, in case that SpCell RSRP is lower than the threshold for NR SpCell RSRP measurement, the terminal is required to perform measurements on non-serving cells.
a measurement quantity configuration, which includes a measurement quantity and a layer 3 (L3) filter coefficient, the measurement quantity may include measurement indicators such as RSRP, signal to interference plus noise ratio (SINR), reference signal receiving quality (RSRQ), etc., and the measurement quantity configuration may refer to the related art and is not repeated here;
measurement gap sharing configuration information;
inter-frequency gap configuration information, which refers to a configuration associated with an inter-frequency gap, such as interFrequencyConfig-NoGap;
identification information for adding/modifying/releasing a certain measurement ID;
operation indication information for a certain measurement ID, and the operation indication information may be used to add, modify, or release the measurement ID;
a specific parameter value for adding/modifying the measurement ID, and one or more parameter values may be added/modified;
identification information for adding/modifying/releasing a measurement object;
operation indication information for a certain measurement object, and the operation indication information may be used to add, modify, or release the measurement object;
a specific parameter value for adding/modifying the measurement object, and one or more parameter values may be added/modified;
identification information for adding/modifying/releasing a certain reporting configuration;
operation indication information for a certain reporting configuration, and the operation indication information may be used to add, modify, or release the reporting configuration; or
a specific parameter value for adding/modifying the reporting configuration, and one or more parameter values may be added/modified.

It should be understood that the above examples are provided for the convenience of understanding the present application and should not be any limitation to the present application.

In the method for configuring RRM measurement provided in the embodiments of the present application, the terminal updates the RRM measurement configuration information of the current serving cell through the parameters that need to be switched in the RRM configuration information of the first LTM candidate cell, to obtain the RRM configuration information of the second LTM candidate cell . The configuration is flexible, the method is simple, and the flexibility of RRM measurement configuration is improved.

Generating, based on the RRM configuration information of the first LTM candidate cell and the reference RRM measurement configuration information, the RRM configuration information of the second LTM candidate cell refers to obtaining new RRM configuration information, namely the RRM configuration information of the second LTM candidate cell, through the parameter indicated by the RRM configuration information of the first LTM candidate cell on the basis of the reference RRM measurement configuration information. It should be understood that during this procedure, the reference RRM measurement configuration information remains unchanged, and the terminal may continue to maintain the reference RRM measurement configuration information for the next use.

In an embodiment, generating, based on the RRM configuration information of the first LTM candidate cell and the reference RRM measurement configuration information, the RRM configuration information of the second LTM candidate cell includes:
generating, based on a delta configuration parameter in the RRM configuration information of the first LTM candidate cell and the reference RRM measurement configuration information, the RRM configuration information of the second LTM candidate cell .

A delta configuration parameter refers to issuing a parameter based on a fixed type of configuration parameter, namely a reference configuration. For example, if there are three types of parameters in delta configuration parameters: A, B, and C, then regardless of whether the parameter values need to be modified, the corresponding parameter values for A, B, and C are issued. The introduction of delta parameters may be referred to the related art and is not repeated here.

By way of example, Table 1 is a schematic table of reference RRM measurement configuration information provided in the embodiments of the present application, and Table 2 is a schematic table of delta configuration parameters provided in the embodiments of the present application.

**Table 1 Schematic table of reference RRM measurement configuration information**

| | index1 | index2 |
|---|---|---|
| A | 00 | 00 |
| B | 00 | 00 |
| C | 00 | 00 |
| D | 00 | 00 |

**Table 2 Schematic table of delta configuration parameters**

| | index1 | index2 |
|---|---|---|
| A | 00 | 00 |
| B | 10 | 00 |
| C | 00 | 10 |

The reference RRM measurement configuration information includes four configuration parameter types: A, B, C, and D. The configuration parameter types may be the identification information of a candidate cell, a measurement ID, and a measurement object, etc. The specific content of the configuration parameter types may refer to the parameter types in the related art, which is not repeated here.

The delta configuration parameters may include all or part of the parameters in the reference RRM measurement configuration information]

In case that the delta configuration parameters and the parameter values of the reference RRM measurement configuration information are the same, the same parameter values are retained as the parameter values of the RRM configuration information of the second LTM candidate cell . For example, in Table 1 and Table 2, if parameter values of index 1 and index 2 corresponding to A are the same, parameter values of index 2 corresponding to B are the same, and parameter values of index 1 corresponding to C are the same, then the same parameter values are retained.

If the delta configuration parameters and the parameter values of the reference RRM measurement configuration information are different, the parameter values corresponding to the delta configuration parameters are determined as the parameter values of the RRM configuration information of the second LTM candidate cell . For example, in Table 1 and Table 2, if the index 1 corresponding to B and index 2 corresponding to C have different parameter values, then the index 1 corresponding to B and index 2 corresponding to C in the delta configuration parameters are determined as the parameter values of the RRM configuration information of the second LTM candidate cell .

For parameter values not indicated by delta configuration parameters, the parameters in the reference RRM measurement configuration information are determined as the parameters of the RRM configuration information of the second LTM candidate cell . For example, in Table 1 and Table 2, if delta configuration parameters do not indicate D, the index 1 and index 2 corresponding to the reference RRM measurement configuration information are determined as the parameter values of the RRM configuration information of the second LTM candidate cell .

Table 3 may be obtained and is a schematic table of the RRM configuration information of the second LTM candidate cell provided in the embodiments of the present application. The RRM configuration information of the second LTM candidate cell obtained based on Table 1 and Table 2 is shown in Table 3.

**Table 3 Schematic table of the RRM configuration information of the second LTM candidate cell**

| | index 1 | index2 |
|---|---|---|
| A | 00 | 00 |
| B | 10 | 00 |
| C | 00 | 10 |
| D | 00 | 00 |

It should be understood that the above examples are provided for the convenience of understanding the present application and should not be any limitation to the present application.

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

The threshold for SpCell RSRP measurement may be the threshold for NR SpCell RSRP measurement. The threshold for NR SpCell RSRP measurement is used to control when a terminal is required to perform measurements on non-serving cells, and for example, in case that the SpCell RSRP is lower than the threshold for NR SpCell RSRP measurement, the terminal is required to perform measurements on non-serving cells.

In the method for configuring radio resource management (RRM) measurement provided in the embodiments of the present application, delta configuration parameters are indicated through the RRM configuration information of the first LTM candidate cell, and the RRM configuration information of the second LTM candidate cell is obtained through the delta configuration parameters and reference RRM measurement configuration information. After the executing the L1/L2 mobility command to access the target candidate cell, the terminal may perform RRM measurement and reporting in the target candidate cell based on the RRM measurement configuration corresponding to the target candidate cell in the RRM configuration information of the second LTM candidate cell .

For determining, based on the RRM configuration information of the first LTM candidate cell, the RRM configuration information of the second LTM candidate cell in the RRM measurement configuration pool, the RRM configuration information of the second LTM candidate cell is obtained by selecting the required configuration information from the RRM measurement configuration pool through the RRM configuration information of the first LTM candidate cell; or, unnecessary configuration information may be released from the RRM measurement configuration pool using the RRM configuration information of the first LTM candidate cell, to obtain the RRM configuration information of the second LTM candidate cell, i.e., configuration information other than the released configuration information in the RRM measurement configuration pool is used for RRM measurement.

In an embodiment, in case that the RRM configuration information of the second LTM candidate cell is determined in the RRM measurement configuration pool through the first LTM candidate cell configuration information, the first LTM candidate cell configuration information includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In case that the first LTM candidate cell configuration information indicates the configuration that the UE is required for measurement, that is, the network selects some configurations from the RRM measurement configuration pool through the first LTM candidate cell configuration information and configures to the UE:
identification information of a candidate cell is used to identify for which candidate cell the RRM measurement configuration is configured;
measurement ID information needed to be measured is the measurement ID information needed to be measured configured by the network for the UE; the measurement ID is selected from the RRM measurement configuration pool, and the selected measurement ID is a measurement ID that the UE is required to measure after accessing the candidate cell;
ID information for a measurement object needed to be measured refers to the measurement object information needed to be measured configured by the network for the UE; the measurement object is selected from the RRM measurement configuration pool, and the selected measurement object is a measurement object that the UE is required to measure after accessing the candidate cell; and
ID information for a reporting configuration needed to be measured refers to the reporting configuration ID information needed to be measured configured by the network to the UE; the reporting configuration is selected from the RRM measurement configuration pool, and the selected reporting configuration is a reporting configuration that the UE is required to use after accessing the candidate cell.

In case that the first LTM candidate cell configuration information indicates a configuration that the UE is not required for measurement, i.e., all configurations in the default RRM measurement configuration pool are valid:
identification information of a candidate cell is used to identify for which candidate cell the RRM measurement configuration is configured;
measurement ID information not needed to be measured refers to the measurement ID information not needed to be measured configured by the network for the UE; i.e., the UE defaults to assuming that all measurement ID configurations in the RRM measurement configuration pool are the measurement ID configurations that the UE is required to use after accessing the target candidate cell; the network selects the measurement ID from the RRM measurement configuration pool, and the selected measurement ID is a measurement ID that the UE is not required to measure after accessing the candidate cell, and configures to the UE; the remaining measurement IDs in the RRM measurement configuration pool are the measurement IDs that the UE is required to use after accessing the target candidate cell;
ID information for a measurement object not needed to be measured refers to the measurement object information not needed to be measured configured by the network for the UE; i.e., the UE defaults to assuming that all measurement object ID configurations in the RRM measurement configuration pool are measurement object configurations that the UE is required to use after accessing the target candidate cell; the network selects the measurement object from the RRM measurement configuration pool, and the selected measurement object is a measurement object ID that the UE is not required to measure after accessing the candidate cell, and configures to the UE; the remaining measurement objects IDs in the RRM measurement configuration pool are measurement object IDs that the UE is required to use after accessing the target candidate cell; and
ID information for a reporting configuration not needed to be measured refers to the reporting configuration ID information not needed to be measured configured by the network to the UE; i.e., the UE defaults to assuming that all reporting configuration ID configurations in the RRM measurement configuration pool are the measurement object configurations that the UE is required to use after accessing the target candidate cell; the network selects the reporting configuration from the RRM measurement configuration pool, and the selected reporting configuration is a reporting configuration ID that the UE is not required to measure after accessing the candidate cell, and configures to the UE; the remaining reporting configuration IDs in the RRM measurement configuration pool are reporting configuration IDs that the UE is required to use after accessing the target candidate cell.

It should be understood that the measurement object ID is used to identify the measurement object, and the reporting configuration ID is used to identify the reporting configuration.

In the method for configuring RRM measurement provided in the embodiments of the present application, the RRM configuration information of the second LTM candidate cell is obtained by indicating that the UE is required or is not required to perform measurements in the RRM measurement configuration pool through the RRM configuration information of the first LTM candidate cell . After executing the L1/L2 mobility command to access the target candidate cell, the terminal may perform RRM measurement and reporting in the target candidate cell based on the RRM measurement configuration corresponding to the target candidate cell in the RRM configuration information of the second LTM candidate cell .

In an embodiment, before determining the RRM configuration information of the second LTM candidate cell, the method further includes:
receiving the first RRM measurement configuration information transmitted from the network side.

In an embodiment, the first RRM measurement configuration information may be configured by the network side based on the needs of the UE and transmitted to the UE. It should be understood that the UE may obtain the RRM measurement configuration information of the current serving cell in a connected state, and the RRM measurement configuration information of the current serving cell is also transmitted from the network side.

In an embodiment, UE may store: the RRM configuration information of the second LTM candidate cell, which is the corresponding pre-configuration information of each candidate cell; the first LTM candidate cell configuration information, such as the RRM measurement configuration for each candidate cell specified by the network; and the first RRM measurement configuration information, such as RRM measurement configuration pool, etc.

In the method for configuring RRM measurement provided in the embodiments of the present application, the terminal may store the RRM configuration information of the first LTM candidate cell, the first RRM measurement configuration information, and the RRM configuration information of the second LTM candidate cell, without the need to receive new configuration information every time or receive multiple network transmissions, which avoids the waste of signaling resources.

FIG. 2 is a second schematic flowchart of a method for configuring radio resource management (RRM) measurement according to an embodiment of the present application. As shown in FIG. 2, the embodiments of the present application provide a method for configuring radio resource management (RRM) measurement performed by network side, including:
step 210: transmitting, to a terminal, RRM configuration information of a first layer 1/layer 2 (L1/L2)-triggered mobility (LTM) candidate cell and/or first RRM measurement configuration information,
where the RRM configuration information of the first LTM candidate cell and/or the first RRM measurement configuration information is used for the terminal to determine RRM configuration information of the second LTM candidate cell, where the RRM configuration information of the second LTM candidate cell is used for the terminal to perform an RRM measurement in a target candidate cell after LTM.

In an embodiment, the RRM configuration information of the first LTM candidate cell and the first RRM measurement configuration information may be transmitted through the same signaling or through different signalings.

In an embodiment, the first RRM measurement configuration information includes any of the following:
reference RRM measurement configuration information; or
an RRM measurement configuration pool.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, the reference RRM measurement configuration information, the RRM measurement configuration pool, the fixed RRM measurement configuration information transmitted from the network side, and the RRM measurement configuration information of a current serving cell when the terminal receives the RRM configuration information of the first LTM candidate cell may refer to the previous introduction and are not repeated here.

In an embodiment, the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

The introduction of the role of the RRM configuration information of the first LTM candidate cell mentioned above may refer to the previous introduction and is not repeated here.

In an embodiment, in case that the RRM configuration information of the first LTM candidate cell is used to modify the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the RRM configuration information of the first LTM candidate cell includes a delta configuration parameter for generating the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the first LTM candidate cell configuration information used to determine the RRM configuration information of the second LTM candidate cell in the RRM measurement configuration pool includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In case that the first LTM candidate cell configuration information indicates the configuration that needs to be measured by the UE, that is, the network selects some configurations from the RRM measurement configuration pool through the first LTM candidate cell configuration information and configures to the UE:
identification information of a candidate cell is used to identify for which candidate cell the RRM measurement configuration is configured;
measurement ID information needed to be measured refers to the measurement ID information needed to be measured configured by the network for the UE; the measurement ID is selected from the RRM measurement configuration pool, and the selected measurement ID is the measurement ID that the UE is required to measure after accessing the candidate cell;
ID information for a measurement object needed to be measured refers to the measurement object information needed to be measured configured by the network for the UE; the measurement object is selected from the RRM measurement configuration pool, and the selected measurement object is a measurement object that the UE is required to measure after accessing the candidate cell; and
ID information for a reporting configuration needed to be measured refers to the reporting configuration ID information needed to be measured configured by the network to the UE; the reporting configuration is selected from the RRM measurement configuration pool, and the selected reporting configuration is a reporting configuration that the UE is required to use after accessing the candidate cell.

In case that the first LTM candidate cell configuration information indicates a configuration that UE is not required for measurement, i.e., all configurations in the default RRM measurement configuration pool are valid:
identification information of a candidate cell is used to identify for which candidate cell the RRM measurement configuration is configured;
measurement ID information not needed to be measured refers to the measurement ID information not needed to be measured configured by the network for the UE; the network selects the measurement ID from the RRM measurement configuration pool, and the selected measurement ID is the measurement ID that the UE is not required to measure after accessing the candidate cell, and configures to the UE; the remaining measurement IDs in the RRM measurement configuration pool are measurement IDs that the UE is required to use after accessing the target candidate cell;
ID information for a measurement object not needed to be measured refers to the measurement object information not needed to be measured configured by the network for the UE; the network selects the measurement object from the RRM measurement configuration pool, and the selected measurement object is a measurement object ID that the UE is not required to measure after accessing the candidate cell, and configures to the UE; the remaining measurement objects IDs in the RRM measurement configuration pool are measurement object IDs that the UE is required to use after accessing the target candidate cell; and
ID information for a reporting configuration not needed to be measured refers to the reporting configuration ID information not needed to be measured configured by the network to the UE; the network selects the reporting configuration from the RRM measurement configuration pool, and the selected reporting configuration is a reporting configuration ID that the UE is not required to measure after accessing the candidate cell, and configures to the UE; the remaining reporting configuration IDs in the RRM measurement configuration pool are reporting configuration IDs that the UE is required to use after accessing the target candidate cell.

Below, the present application is introduced with multiple embodiments.

Embodiment 1: the RRM configuration information of the first LTM candidate cell includes a delta configuration parameter, which is a delta configuration corresponding to the reference RRM measurement configuration information. The network side indicates the RRM measurement configuration for each LTM candidate cell through the delta configuration parameter.

### Step 1

Step 1-1: the network indicates each LTM candidate cell and configuration information thereof to the UE.

This LTM candidate cell configuration information may be configured at the cell group level, that is, a set of cell group configurations may be configured for each L1/L2 candidate cell. It may also be configured without limitation in the cell group.

It should be understood that the cell configuration information here is used for LTM.

In an embodiment, step 1-2: the network configures a set of fixed RRM measurement configuration information for each UE, and the fixed RRM measurement configuration information is used as a reference configuration for the network to specify RRM measurement configuration for each LTM candidate cell.

The fixed RRM measurement configuration information includes measurement object configuration, reporting configuration, measurement ID configuration, measurement gap configuration, and other information.

If the terminal receives the fixed RRM measurement configuration information, the fixed RRM measurement configuration information is determined as the reference RRM measurement configuration information. If the terminal does not receive the fixed RRM measurement configuration information, the terminal may determine the RRM measurement configuration information of a current serving cell when the terminal receives the RRM configuration information of the first LTM candidate cell as reference RRM measurement configuration information.

Step 1-3: the network specifies RRM measurement configuration for each LTM candidate cell through the RRM configuration information of the first LTM candidate cell and transmits to the UE. The UE determines the RRM configuration information of the second LTM candidate cell through the RRM configuration information of the first LTM candidate cell transmitted from the network.

The RRM configuration information of the first LTM candidate cell mainly includes the following two cases.

It should be understood that, regarding the delta configuration based on the RRM measurement configuration of current serving cell, the RRM measurement configuration of the current serving cell here refers to the RRM measurement configuration information of a current serving cell when the terminal receives the RRM configuration information of the first LTM candidate cell.

Descriptions regarding the delta configuration of the fixed RRM measurement configuration information in steps 1-2 are as follows.

In an embodiment, the delta configuration parameter includes one or more pieces of the following information:
identification information of a candidate cell, used to identify for which candidate cell the RRM measurement configuration is configured;
an information list of measurement IDs to add or modify, i.e., an information list of measurement IDs to add/modify, which is similar to MeasIdToAddModList IE, where the measurement IDs to be added or modified may be configured in this list;
an information list of measurement IDs to release, i.e., an information list of measurement IDs to release, which is similar to MeasIdToRemoveList IE, where the measurement IDs to be released may be configured in this list;
an information list of measurement objects to add or modify, i.e., an information list of measurement objects to add/modify, which is similar to MeasObjectToAddModList IE, where the measurement objects to be added or modified may be configured in this list;
an information list of measurement objects to release, which is similar to MeasObjectToRemoveList IE, where the measurement objects to be released may be configured in this list;
an information list of reporting configurations to add or modify, i.e., an information list of reporting configurations to add/modify, which is similar to ReportConfigToAddModList IE, where the reporting configurations to be added or modified may be configured in this list;
an information list of reporting configurations to release, which is similar to ReportConfigToRemoveList IE, where the reporting configurations to be released may be configured in this list;
measurement gap configuration information, used for measuring a gap configuration;
a threshold for SpCell RSRP measurement, i.e., a threshold for NR SpCell RSRP measurement, is used to control when UE is required to perform measurements on non-serving cells;
measurement quantity configuration information, used for measuring a quantity configuration;
measurement gap sharing configuration information, used for measuring a gap sharing configuration; or
inter-frequency gap configuration information, which refers to configurations associated with inter-frequency gaps, such as interFrequencyConfig-NoGap.

In an embodiment, the information transmitted from the network side in step 1-1, step 1-2, and step 1-3 may be in the same RRC signaling or in different RRC signalings, without limitation in any time sequence.

Step 2: the network transmits an L1/L2 mobility command to the UE, and the UE executes the L1/L2 mobility command and accesses the target candidate cell.

Step 3: the UE performs RRM measurement using the RRM measurement configuration specified for the target candidate cell in the target cell. The RRM measurement configuration specified for the target candidate cell may be determined based on the RRM configuration information of the second LTM candidate cell .

In an embodiment, step 4: the UE stores the corresponding pre-configuration information of each candidate cell (such as the RRM configuration information of the second LTM candidate cell ), the RRM measurement configuration for each candidate cell (the RRM configuration information of the first LTM candidate cell ) specified by the network, the fixed RRM measurement configuration information, or the RRM measurement configuration information of the source cell, where the RRM measurement configuration information of the source cell refers to the RRM measurement configuration information of a current serving cell when the terminal receives the RRM configuration information of the first LTM candidate cell

Embodiment 2: the RRM configuration information of the first LTM candidate cell includes configuration information corresponding to the RRM measurement configuration pool. The network side indicates the RRM measurement configuration for each LTM candidate cell in the RRM measurement configuration pool through the RRM configuration information of the first LTM candidate cell . The terminal determines the RRM configuration information of the second LTM candidate cell in the RRM measurement configuration pool based on the RRM configuration information of the first LTM candidate cell .

### Step 1

Step 1-1: the network configures each LTM candidate cell and configuration information thereof for the UE.

This LTM candidate cell configuration information may be configured at the cell group level, that is, a set of cell group configurations may be configured for each L1/L2 candidate cell. It may also be configured without limitation in the cell group.

It should be understood that the cell configuration information here is used for LTM.

Step 1-2: the network configures a set of RRM measurement configuration pool for the UE.

The configuration in the RRM measurement configuration pool includes one or more of the following configurations:
one or more pieces of measurement ID configuration information, where each piece of measurement ID configuration information may include one measurement ID identification value, one measurement object identification value, and one reporting configuration identification value; or
one or more pieces of measurement object configuration information, where each piece of measurement object configuration includes a measurement object identification value, and one or more parameter values of the measurement object; or
one or more pieces of configuration information for reporting configuration, where each piece of reporting configuration includes a reporting configuration identification value, and one or more parameter values of the reporting configuration.

Step 1-3: the network specifies RRM measurement configuration for each LTM candidate cell through the RRM configuration information of the first LTM candidate cell, that is, the RRM configuration information of the second LTM candidate cell; the RRM configuration information of the second LTM candidate cell is configured based on the RRM measurement configuration pool in step 1-2.

In case that the network configuration requires a UE measurement to be configured (the network selects some configurations from the RRM measurement configuration pool and configures to the UE), the RRM configuration information of the first LTM candidate cell may include one or more pieces of the following information:
identification information of a candidate cell, used to identify for which candidate cell the RRM measurement configuration is configured;
measurement ID information needed to be measured by UE configured by the network, i.e., the measurement ID is selected from the RRM measurement configuration pool, and the selected measurement ID is a measurement ID that the UE is required to measure after accessing the candidate cell;
measurement object information needed to be measured by UE configured by the network, i.e., the measurement object is selected from the RRM measurement configuration pool, and the selected measurement object is a measurement object that the UE is required to measure after accessing the candidate cell; or
reporting configuration information needed to be measured by UE configured by the network, i.e., the reporting configuration is selected from the RRM measurement configuration pool, and the selected reporting configuration is a reporting configuration that the UE is required to measure after accessing the candidate cell.

In case that the network configuration does not require a UE measurement to be configured (all configurations in the RRM measurement configuration pool are defaulted to be valid by the UE), the RRM configuration information of the first LTM candidate cell may include one or more pieces of the following information:
identification information of a candidate cell is used to identify for which candidate cell the RRM measurement configuration is configured;
measurement ID information not needed to be measured by UE configured by the network, i.e., the measurement ID is selected from the RRM measurement configuration pool, and the selected measurement ID is a measurement ID that the UE is not required to measure after accessing the candidate cell;
measurement object information not needed to be measured by UE configured by the network, i.e., the measurement object is selected from the RRM measurement configuration pool, and the selected measurement object is a measurement object that the UE is not required to measure after accessing the candidate cell; or
reporting configuration information needed to be measured by UE configured by the network, i.e., the reporting configuration is selected from the RRM measurement configuration pool, and the selected reporting configuration is a reporting configuration that the UE is not required to measure after accessing the candidate cell.

In an embodiment, the information transmitted from the network side in step 1-1, step 1-2, and step 1-3 may be in the same RRC signaling or in different RRC signalings, without any time sequence restrictions.

Step 2: the network transmits an L1/L2 mobility command to the UE, and the UE executes the L1/L2 mobility command and accesses the target cell.

Step 3: the UE performs RRM measurement using the RRM measurement configuration specified for the target candidate cell in the target cell. The RRM measurement configuration specified for the target candidate cell may be determined based on the RRM configuration information of the second LTM candidate cell .

In an embodiment, step 4: the UE stores the corresponding pre-configuration information of each candidate cell (such as the RRM configuration information of the second LTM candidate cell ), the RRM measurement configuration for each candidate cell (the RRM configuration information of the first LTM candidate cell ) specified by the network, and the RRM measurement configuration pool information.

Embodiment 3: the RRM configuration information of the first LTM candidate cell includes the parameter values need to be switched configured by the network for each LTM candidate cell. The terminal obtains, on the basis of the reference RRM measurement configuration information reference configuration or the RRM measurement configuration information of the current serving cell, the RRM configuration information of the second LTM candidate cell based on the RRM configuration information of the first LTM candidate cell .

### Step 1

Step 1-1: the network configures each LTM candidate cell and configuration information thereof for the UE.

This LTM candidate cell configuration information may be configured at the cell group level, that is, a set of cell group configurations may be configured for each L1/L2 candidate cell. It may also be configured without limitation in the cell group.

It should be understood that the cell configuration information here is used for LTM.

Step 1-2: the network specifies the RRM configuration information of the first LTM candidate cell for each LTM candidate cell. In this embodiment, the RRM configuration information of the first LTM candidate cell includes parameter values need to be switched configured by the network for each LTM candidate cell.

In an embodiment, the parameter values need to be switched configured by the network for each LTM candidate cell include one or more of the following:
a measurement gap configuration;
a threshold for NR SpCell RSRP measurement (used to control when UE is required to perform measurements on non-serving cells);
a measurement quantity configuration;
a measurement gap sharing configuration;
an inter-frequency gap associated configuration (interFrequencyConfig-NoGap);
identification information of a candidate cell, used to identify for which candidate cell the RRM measurement configuration is configured;
identification information for adding/modifying/releasing a certain measurement ID, indicating the measurement ID identification information to be added/modified/released, such as modifying or releasing existing measurement ID1, ID2, and ID3; in case that a measurement ID is to be added, this value is a new measurement ID value, and the added measurement ID value is not included in the reference RRM measurement configuration information or the RRM measurement configuration information of the current serving cell;
operation indication information for a certain measurement ID, which may be an enumeration type, such as {add, modify, release}, indicating the addition, modification, or release of this measurement ID;
a specific parameter value for adding/modifying the measurement ID, which may be a parameter value in one or more measurement ID configurations to be added/modified; in case that a measurement ID is to be added, the specific parameter value for adding/modifying the measurement ID may include all the parameters to be configured under the entire measurement ID configuration, or it may be indicated that some to be referred to other measurement ID configurations, and some parameters to be newly configured; if it is indicated that some to be referred to other measurement ID configurations, the specific parameter value for adding/modifying the measurement ID may include the identification information of the referred measurement ID;
identification information for adding/modifying/releasing a measurement object, indicating the identification information of the measurement object to be added/modified/released, in case that a measurement ID is to be added, then this value is the new measurement ID value, which is not included in the reference configuration;
operation indication information for a certain measurement object, which may be an enumeration type, such as {add, modify, release}, indicating the addition, modification, or release of this measurement object;
a specific parameter value for adding/modifying the measurement object, which may be parameter values configured for one or more measurement objects to be added/modified; in case that a measurement object is to be added, the specific parameter value for adding/modifying the measurement object may include all the parameters to be configured under the entire measurement object configuration, or it may be indicated that some to be referred to other measurement object configurations, and some parameters to be newly configured; if it is indicated that some to be referred to other measurement object configurations, the specific parameter value for adding/modifying the measurement object may include the identification information of the referred measurement object;
identification information for adding/modifying/releasing a certain reporting configuration, indicating the reporting configuration identification information to be added/modified/released, such as 1, 2, 3.... In case that a measurement ID is to be added, then this value is the new measurement ID value, which is not in the reference configuration;
operation indication information for a certain reporting configuration, which may be an enumeration type, such as {add, modify, release}, indicating the addition, modification, and release of this reporting configuration; or
a specific parameter value for adding/modifying the reporting configuration, which may be parameter values configured for one or more reporting configurations to be added/modified; to add a reporting configuration, the specific parameter value for adding/modifying the reporting configuration may include all the parameters to be configured under the entire reporting configuration, or it may be indicated that some to be referred to other reporting configurations, and some parameters to be newly configured; if it is indicated that some to be referred to other reporting configurations, the specific parameter value for adding/modifying the reporting configuration may include the identification information of the reporting configuration.

In an embodiment, the information transmitted from the network side in step 1-1, step 1-2, and step 1-3 may be in the same RRC signaling or in different RRC signalings, without any time sequence restrictions.

Step 2: the network transmits an L1/L2 mobility command to the UE, and the UE executes the L1/L2 mobility command and accesses the target candidate cell.

Step 3: the UE performs a RRM measurement using the RRM measurement configuration specified for the target candidate cell in the target cell. The RRM measurement configuration specified for the target candidate cell may be determined based on the RRM configuration information of the second LTM candidate cell .

In an embodiment, step 4: UE stores the corresponding pre-configuration information of each candidate cell (such as the RRM configuration information of the second LTM candidate cell ) and the RRM measurement configuration for each candidate cell (the RRM configuration information of the first LTM candidate cell ) specified by the network.

For example, gap measurement is taken as an example.

Step 1-1: the current UE is in cell0, and the network configures an LTM candidate cell and configuration information thereof for the UE. For example, the network configures 5 LTM candidate cells, which are candidate cell1, candidate cell2, candidate cell3, candidate cell4, and candidate cell5, and configuration information thereof for UE.

Step 1-2: the network configures the measurement gap values of each LTM candidate cell for the UE (the RRM configuration information of the first LTM candidate cell ). For example, the network configures MeasGapConfig1 for candidate cell1, MeasGapConfig2 for candidate cell2, MeasGapConfig3 for candidate cell3, MeasGapConfig4 for candidate cell4, and MeasGapConfig5 for candidate cell5.

Step 2: the UE executes L1/L2 mobility command to switch from cell0 to cell3.

Step 3: the UE continues to use RRM measurement configuration for cell0 in cell3, but updates the measurement gap value in cell0's RRM configuration to MeasGapConfig3.

It should be understood that the RRM measurement configuration for cell0 is the RRM measurement configuration information of the current serving cell before the UE switches.

Step 4: UE saves the configuration values of MeasGapConfig1 of candidate cell1~MeasGapConfig5 of candidate cell5.

Similar mechanisms may also be performed with other parameters, which are not repeated here.

Example 4: the network indicates the UE to continue using the RRM measurement configuration for the current serving cell through the RRM configuration information of the first LTM candidate cell . The terminal determines, based on the RRM configuration information of the first LTM candidate cell, that the RRM measurement configuration information of the current serving cell is the RRM configuration information of the second LTM candidate cell .

### Step 1

Step 1-1: the network configures each LTM candidate cell and configuration information thereof for the UE.

This LTM candidate cell configuration information may be configured at the cell group level, that is, a set of cell group configurations may be configured for each L1/L2 candidate cell. It may also be configured without limitation in the cell group.

Step 1-2: the network specifies RRM measurement configuration for each LTM candidate cell, in this embodiment, the network indicates the UE to continue using the RRM measurement configuration for the current serving cell through the RRM configuration information of the first LTM candidate cell . The terminal determines, based on the RRM configuration information of the first LTM candidate cell, that the RRM measurement configuration information of the current serving cell to be the RRM configuration information of the second LTM candidate cell .

In an embodiment, the information transmitted from the network side in step 1-1, step 1-2, and step 1-3 may be in the same RRC signaling or in different RRC signalings, without any time sequence restrictions.

Step 2: the network transmits an L1/L2 mobility command to the UE, and the UE executes the L1/L2 mobility command and accesses the target candidate cell.

Step 3: the UE performs RRM measurement using the RRM measurement configuration specified for the target candidate cell in the target cell. The RRM measurement configuration specified for the target candidate cell may be determined based on the RRM configuration information of the second LTM candidate cell .

In an embodiment, step 4: the UE stores the corresponding pre-configuration information of each candidate cell (such as the RRM configuration information of the second LTM candidate cell ), the RRM measurement configuration for each candidate cell (the RRM configuration information of the first LTM candidate cell ) specified by the network.

An embodiment of the present application provides a measurement configuration method associated with LTM. The network indicates the RRM measurement configuration for each LTM candidate cell through the RRM configuration information of the first LTM candidate cell . When executing the L1/L2 mobility command to access the target cell, the UE performs RRM measurement in the target cell using the RRM measurement configuration specified for the target candidate cell. The RRM measurement configuration specified for the target candidate cell may be determined based on the RRM configuration information of the second LTM candidate cell .

FIG. 3 is a first schematic structural diagram of an apparatus for configuring radio resource management (RRM) measurement according to an embodiment of the present application. The embodiments of the present application provide an apparatus for configuring RRM measurement, which may be used in a terminal. The apparatus includes a first receiving unit 310 and a first determining unit 320, where
the first receiving unit 310 is used for receiving RRM configuration information of a first layer 1/layer 2 (L1/L2)-triggered mobility (LTM) candidate cell transmitted from a network side; and
the first determining unit 320 is used for determining, based on the RRM configuration information of the first LTM candidate cell and/or first RRM measurement configuration information, RRM configuration information of a second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, the first determining unit 320 is used for determining, based on the RRM configuration information of the first LTM candidate cell, RRM measurement configuration information of a current serving cell as the RRM configuration information of the second LTM candidate cell; or
the first determining unit 320 is used for updating, based on the RRM configuration information of the first LTM candidate cell, RRM measurement configuration information of a current serving cell to obtain the RRM configuration information of the second LTM candidate cell; or
the first determination unit 320 is used for generating, based on the RRM configuration information of the first LTM candidate cell and the reference RRM measurement configuration information, the RRM configuration information of the second LTM candidate cell; or
the first determining unit 320 is used for determining, based on the RRM configuration information of the first LTM candidate cell, the RRM configuration information of the second LTM candidate cell in the RRM measurement configuration pool.

In an embodiment, the first determining unit 320 is used for generating, based on a delta configuration parameter in the RRM configuration information of the first LTM candidate cell and the reference RRM measurement configuration information, the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, first LTM candidate cell configuration information includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In an embodiment, the first receiving unit 310 is also used for receiving the first RRM measurement configuration information transmitted from the network side.

The methods and apparatuses provided in each embodiment of the present application are based on the same application concept. As the method for configuring RRM measurement performed by the terminal and the apparatus for configuring RRM measurement used in the terminal have similar principles for solving problems and may achieve the same technical effects, the implementation of the apparatuses and methods may be referred to each other, and the details are not repeated.

FIG. 4 is a second schematic structural diagram of an apparatus for configuring radio resource management (RRM) measurement according to an embodiment of the present application. The embodiments of the present application provide an apparatus for configuring RRM measurement, which may be used in network side. The apparatus includes a second transmitting unit 410, where
the second transmitting unit 410 is sed for transmitting, to a terminal, RRM configuration information of a first layer 1/layer 2 (L1/L2)-triggered mobility (LTM) candidate cell and/or first RRM measurement configuration information,
where the RRM configuration information of the first LTM candidate cell and/or the first RRM measurement configuration information is used for the terminal to determine RRM configuration information of the second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

In an embodiment, in case that the RRM configuration information of the first LTM candidate cell is used to modify the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the RRM configuration information of the first LTM candidate cell includes a delta configuration parameter for generating the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, the first LTM candidate cell configuration information used to determine the RRM configuration information of the second LTM candidate cell in the RRM measurement configuration pool includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

The methods and apparatuses provided in each embodiment of the present application are based on the same application concept. As the method for configuring RRM measurement performed by the network side and the apparatus for configuring RRM measurement used in the network side have similar principles for solving problems and may achieve the same technical effects, the implementation of the apparatuses and methods may be referred to each other, and the details are not repeated.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

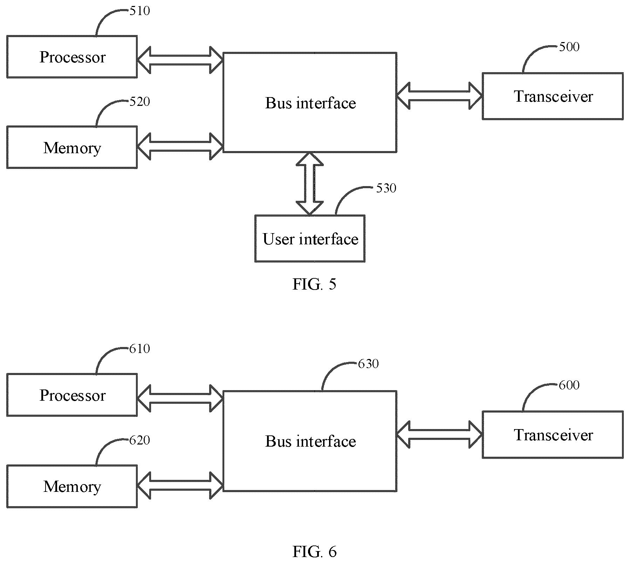

FIG. 5 is a schematic structural diagram of a terminal according to an embodiment of the present application. As shown in FIG. 5, the terminal includes a memory 520, a transceiver 500, and a processor 510, where the processor 510 and the memory 520 may also be physically separated and arranged separately.

The memory 520 is used for storing a computer program; the transceiver 500 is used for transmitting and receiving data under control of the processor 510; the processor 510 calls the computer program stored in the memory 520 to execute any of the corresponding operations for RRM measurement configuration performed by the terminal provided in the embodiments of the present application according to the obtained executable instruction, such as:
receiving RRM configuration information of a first layer 1/layer 2 (L1/L2)-triggered mobility (LTM) candidate cell transmitted from a network side; and
determining, based on the RRM configuration information of the first LTM candidate cell and/or first RRM measurement configuration information, RRM configuration information of a second LTM candidate cell, where the RRM configuration information of the second LTM candidate cell is used for the terminal to perform an RRM measurement in a target candidate cell after LTM.

In an embodiment, the transceiver 500 is used for receiving and transmitting data under control of the processor 510.

In FIG. 5, a bus architecture may include any number of interconnected buses and bridges, which are linked together through various circuits of one or more processors represented by the processor 510 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 500 may be multiple elements, i.e., including a transmitter and a receiver, units for providing communication with various other devices over transmission media including wireless channels, wired channels, fiber optic cables, and the like. For different user equipment, the user interface 530 may also be an interface capable of externally or internally connecting the required equipment, and the connected equipment includes, but not limited to, a keypad, a display, a speaker, a microphone, a joystick, and the like.

The processor 510 is responsible for managing the bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA), or a complex programmable logic device (CPLD), and the processor may also adopt a multi-core architecture.

In an embodiment, the first RRM measurement configuration information includes any of the following:
reference RRM measurement configuration information; or
an RRM measurement configuration pool.

In an embodiment, determining, based on the RRM configuration information of the first LTM candidate cell and/or first RRM measurement configuration information, the RRM configuration information of the second LTM candidate cell includes:
determining, based on the RRM configuration information of the first LTM candidate cell, RRM measurement configuration information of a current serving cell as the RRM configuration information of the second LTM candidate cell; or
updating, based on the RRM configuration information of the first LTM candidate cell, RRM measurement configuration information of a current serving cell to obtain the RRM configuration information of the second LTM candidate cell; or
generating, based on the RRM configuration information of the first LTM candidate cell and the reference RRM measurement configuration information, the RRM configuration information of the second LTM candidate cell; or
determining, based on the RRM configuration information of the first LTM candidate cell, the RRM configuration information of the second LTM candidate cell in the RRM measurement configuration pool.

In an embodiment, in case of updating, based on the RRM configuration information of the first LTM candidate cell, the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, generating, based on the RRM configuration information of the first LTM candidate cell and the reference RRM measurement configuration information, the RRM configuration information of the second LTM candidate cell includes:
generating, based on a delta configuration parameter in the RRM configuration information of the first LTM candidate cell and the reference RRM measurement configuration information, the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, first LTM candidate cell configuration information includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In an embodiment, before determining the RRM configuration information of the second LTM candidate cell, the method further includes:
receiving the first RRM measurement configuration information transmitted from the network side.

It should be noted that the terminal provided in the embodiments of the present application may implement all the method steps of the method for configuring RRM measurement performed by the terminal, and may achieve the same technical effects. Therefore, the same parts and beneficial effects as the method embodiments in this embodiment are not repeated here.

FIG. 6 is a schematic structural diagram of a network device according to an embodiment of the present application. As shown in FIG. 6, the electronic device includes a memory 620, a transceiver 600, and a processor 610, where
the memory 620 is used for storing a computer program; the transceiver 600 is used for transmitting and receiving data under control of the processor 610; and the processor 610 is used for reading the computer program from the memory 620 and performing the following operations:
transmitting, to a terminal, RRM configuration information of a first layer 1/layer 2 (L1/L2)-triggered mobility (LTM) candidate cell and/or first RRM measurement configuration information,
where the RRM configuration information of the first LTM candidate cell and/or the first RRM measurement configuration information is used for the terminal to determine RRM configuration information of the second LTM candidate cell, where the RRM configuration information of the second LTM candidate cell is used for the terminal to perform an RRM measurement in a target candidate cell after LTM.

In an embodiment, the transceiver 600 is used for receiving and transmitting data under control of the processor 610.

In FIG. 6, a bus architecture may include any number of interconnected buses and bridges, which are linked together through various circuits of one or more processors represented by the processor 610 and one or more memories represented by the memory 620. The bus architecture may also link together various other circuits, such as peripherals, voltage regulators, and power management circuits, which are well known in the art, and therefore will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), and the processor may also adopt a multi-core architecture.

In an embodiment, the first RRM measurement configuration information includes any of the following:
reference RRM measurement configuration information; or
an RRM measurement configuration pool.

In an embodiment, the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

In an embodiment, in case that the RRM configuration information of the first LTM candidate cell is used to modify the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the RRM configuration information of the first LTM candidate cell includes a delta configuration parameter for generating the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, the first LTM candidate cell configuration information used to determine the RRM configuration information of the second LTM candidate cell in the RRM measurement configuration pool includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

It should be noted that the electronic device provided in the embodiments of the present application may implement all the method steps of the method for configuring RRM measurement performed by the network side, and may achieve the same technical effects. Therefore, the same parts and beneficial effects as the method embodiments in this embodiment are not repeated here.

Embodiments of the present application further provide a processor-readable storage medium, which stores a computer program for causing a processor to perform the method for configuring radio resource management (RRM) measurement performed by the terminal provided in the above embodiments, including:
receiving RRM configuration information of a first layer 1/layer 2 (L1/L2)-triggered mobility (LTM) candidate cell transmitted from a network side; and
determining, based on the RRM configuration information of the first LTM candidate cell and/or first RRM measurement configuration information, RRM configuration information of a second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, determining, based on the RRM configuration information of the first LTM candidate cell and/or first RRM measurement configuration information, the RRM configuration information of the second LTM candidate cell includes:
determining, based on the RRM configuration information of the first LTM candidate cell, RRM measurement configuration information of a current serving cell as the RRM configuration information of the second LTM candidate cell; or
updating, based on the RRM configuration information of the first LTM candidate cell, RRM measurement configuration information of a current serving cell to obtain the RRM configuration information of the second LTM candidate cell; or
generating, based on the RRM configuration information of the first LTM candidate cell and the reference RRM measurement configuration information, the RRM configuration information of the second LTM candidate cell; or
determining, based on the RRM configuration information of the first LTM candidate cell, the RRM configuration information of the second LTM candidate cell in the RRM measurement configuration pool.

In an embodiment, in case of updating, based on the RRM configuration information of the first LTM candidate cell, the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, generating, based on the RRM configuration information of the first LTM candidate cell and the reference RRM measurement configuration information, the RRM configuration information of the second LTM candidate cell includes:
generating, based on a delta configuration parameter in the RRM configuration information of the first LTM candidate cell and the reference RRM measurement configuration information, the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, first LTM candidate cell configuration information includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

In an embodiment, before determining the RRM configuration information of the second LTM candidate cell, the method further includes:
receiving the first RRM measurement configuration information transmitted from the network side.

Embodiments of the present application further provide a processor-readable storage medium, which stores a computer program for causing a processor to perform the method for configuring radio resource management (RRM) measurement performed by the network side provided in the above embodiments, including:
transmitting, to a terminal, RRM configuration information of a first layer 1/layer 2 (L1/L2)-triggered mobility (LTM) candidate cell and/or first RRM measurement configuration information,
where the RRM configuration information of the first LTM candidate cell and/or the first RRM measurement configuration information is used for the terminal to determine RRM configuration information of the second LTM candidate cell, where the RRM configuration information of the second LTM candidate cell is used for the terminal to perform an RRM measurement in a target candidate cell after LTM.

In an embodiment, the first RRM measurement configuration information includes any of the following:
reference RRM measurement configuration information; or
an RRM measurement configuration pool.

In an embodiment, the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

In an embodiment, in case that the RRM configuration information of the first LTM candidate cell is used to modify the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

In an embodiment, the RRM configuration information of the first LTM candidate cell includes a delta configuration parameter for generating the RRM configuration information of the second LTM candidate cell .

In an embodiment, the delta configuration parameter includes any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

In an embodiment, the reference RRM measurement configuration information includes:
fixed RRM measurement configuration information transmitted from the network side; or
RRM measurement configuration information of a current serving cell when the terminal receives the RRM configuration information of the first LTM candidate cell .

In an embodiment, the RRM measurement configuration pool includes any one of the following or a combination thereof:
configuration information for at least one measurement identifier (ID);
configuration information for at least one measurement object; or
configuration information for at least one reporting configuration.

In an embodiment, the first LTM candidate cell configuration information used to determine the RRM configuration information of the second LTM candidate cell in the RRM measurement configuration pool includes any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

The processor-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer-usable storage media (including but not limited to disk storage and optical storage) containing computer usable program code.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for configuring radio resource management (RRM) measurement, performed by a terminal, comprising:
receiving RRM configuration information of a first layer 1/layer 2 (L1/L2)-triggered mobility (LTM) candidate cell transmitted from a network side; and
determining, based on the RRM configuration information of the first LTM candidate cell and/or first RRM measurement configuration information, RRM configuration information of a second LTM candidate cell, wherein the RRM configuration information of the second LTM candidate cell is used for the terminal to perform an RRM measurement in a target candidate cell after LTM.

2. The method according to claim 1, wherein the first RRM measurement configuration information comprises any of the following:
reference RRM measurement configuration information; or
an RRM measurement configuration pool.

3. The method according to claim 2, wherein determining, based on the RRM configuration information of the first LTM candidate cell and/or first RRM measurement configuration information, the RRM configuration information of the second LTM candidate cell comprises:
determining, based on the RRM configuration information of the first LTM candidate cell, RRM measurement configuration information of a current serving cell as the RRM configuration information of the second LTM candidate cell; or
updating, based on the RRM configuration information of the first LTM candidate cell, RRM measurement configuration information of a current serving cell to obtain the RRM configuration information of the second LTM candidate cell; or
generating, based on the RRM configuration information of the first LTM candidate cell and the reference RRM measurement configuration information, the RRM configuration information of the second LTM candidate cell; or
determining, based on the RRM configuration information of the first LTM candidate cell, the RRM configuration information of the second LTM candidate cell in the RRM measurement configuration pool.

4. The method according to claim 3, wherein, in case of updating, based on the RRM configuration information of the first LTM candidate cell, the RRM measurement configuration information of the current serving cell, the RRM configuration information of the first LTM candidate cell comprises any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information;
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

5. The method according to claim 3, wherein generating, based on the RRM configuration information of the first LTM candidate cell and the reference RRM measurement configuration information, the RRM configuration information of the second LTM candidate cell comprises:
generating, based on a delta configuration parameter in the RRM configuration information of the first LTM candidate cell and the reference RRM measurement configuration information, the RRM configuration information of the second LTM candidate cell .

6. The method according to claim 5, wherein the delta configuration parameter comprises any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

7. The method of any according to claims 2 to 6, wherein the reference RRM measurement configuration information comprises:
fixed RRM measurement configuration information transmitted from the network side; or
RRM measurement configuration information of a current serving cell when the terminal receives the RRM configuration information of the first LTM candidate cell .

8. The method according to claim 2 or 3, wherein the RRM measurement configuration pool comprises any one of the following or a combination thereof:
configuration information for at least one measurement identifier (ID);
configuration information for at least one measurement object; or
configuration information for at least one reporting configuration.

9. The method according to claim 8, wherein the first LTM candidate cell configuration information comprises any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

10. The method of any according to claims 1 to 6, wherein before determining the RRM configuration information of the second LTM candidate cell, the method further comprises:
receiving the first RRM measurement configuration information transmitted from the network side.

11. A method for configuring radio resource management (RRM) measurement, performed by a network side, comprising:
transmitting, to a terminal, RRM configuration information of a first layer 1/layer 2 (L1/L2)-triggered mobility (LTM) candidate cell and/or first RRM measurement configuration information,
wherein the RRM configuration information of the first LTM candidate cell and/or the first RRM measurement configuration information is used for the terminal to determine RRM configuration information of the second LTM candidate cell, wherein the RRM configuration information of the second LTM candidate cell is used for the terminal to perform an RRM measurement in a target candidate cell after LTM.

12. The method according to claim 11, wherein the first RRM measurement configuration information comprises any of the following:
reference RRM measurement configuration information; or
an RRM measurement configuration pool.

13. The method according to claim 12, wherein the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

14. The method according to claim 13, wherein, in case that the RRM configuration information of the first LTM candidate cell is used to modify the RRM measurement configuration information of the current serving cell, the RRM configuration information of the first LTM candidate cell comprises any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

15. The method according to claim 13, wherein the RRM configuration information of the first LTM candidate cell comprises a delta configuration parameter for generating the RRM configuration information of the second LTM candidate cell .

16. The method according to claim 15, wherein the delta configuration parameter comprises any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

17. The method of any according to claims 12 to 16, wherein the reference RRM measurement configuration information comprises:
fixed RRM measurement configuration information transmitted from the network side; or
RRM measurement configuration information of a current serving cell when the terminal receives the RRM configuration information of the first LTM candidate cell .

18. The method according to claim 12 or 13, wherein the RRM measurement configuration pool comprises any one of the following or a combination thereof:
configuration information for at least one measurement identifier (ID);
configuration information for at least one measurement object; or
configuration information for at least one reporting configuration.

19. The method according to claim 13, wherein the first LTM candidate cell configuration information used to determine the RRM configuration information of the second LTM candidate cell in the RRM measurement configuration pool comprises any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

20. A terminal, comprising a memory, a transceiver, and a processor, wherein
the memory is used for storing a computer program; the transceiver is used for receiving and transmitting data under control of the processor; and the processor is used for reading the computer program in the memory and performing the following operations:
receiving RRM configuration information of a first layer 1/layer 2 (L1/L2)-triggered mobility (LTM) candidate cell transmitted from a network side; and
determining, based on the RRM configuration information of the first LTM candidate cell and/or first RRM measurement configuration information, RRM configuration information of a second LTM candidate cell, wherein the RRM configuration information of the second LTM candidate cell is used for the terminal to perform an RRM measurement in a target candidate cell after LTM.

21. The terminal according to claim 20, wherein the first RRM measurement configuration information comprises any of the following:
reference RRM measurement configuration information; or
an RRM measurement configuration pool.

22. The terminal according to claim 21, wherein determining, based on the RRM configuration information of the first LTM candidate cell and/or first RRM measurement configuration information, the RRM configuration information of the second LTM candidate cell comprises:
determining, based on the RRM configuration information of the first LTM candidate cell, RRM measurement configuration information of a current serving cell as the RRM configuration information of the second LTM candidate cell; or
updating, based on the RRM configuration information of the first LTM candidate cell, RRM measurement configuration information of a current serving cell to obtain the RRM configuration information of the second LTM candidate cell; or
generating, based on the RRM configuration information of the first LTM candidate cell and the reference RRM measurement configuration information, the RRM configuration information of the second LTM candidate cell; or
determining, based on the RRM configuration information of the first LTM candidate cell, the RRM configuration information of the second LTM candidate cell in the RRM measurement configuration pool.

23. The terminal according to claim 22, wherein, in case of updating, based on the RRM configuration information of the first LTM candidate cell, the RRM measurement configuration information of the current serving cell, the RRM configuration information of the first LTM candidate cell comprises any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

24. The terminal according to claim 22, wherein generating the RRM configuration information of the second LTM candidate cell based on the RRM configuration information of the first LTM candidate cell and the reference RRM measurement configuration information comprises:
generating, based on a delta configuration parameter in the RRM configuration information of the first LTM candidate cell and the reference RRM measurement configuration information, the RRM configuration information of the second LTM candidate cell .

25. The terminal according to claim 24, wherein the delta configuration parameter comprises any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

26. The terminal of any according to claims 21 to 25, wherein the reference RRM measurement configuration information comprises:
fixed RRM measurement configuration information transmitted from the network side; or
RRM measurement configuration information of a current serving cell when the terminal receives the RRM configuration information of the first LTM candidate cell .

27. The terminal according to claim 21 or 22, wherein the RRM measurement configuration pool comprises any one of the following or a combination thereof:
configuration information for at least one measurement identifier (ID);
configuration information for at least one measurement object; or
configuration information for at least one reporting configuration.

28. The terminal according to claim 27, wherein the first LTM candidate cell configuration information comprises any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

29. The terminal of any according to claims 20 to 25, wherein before determining the RRM configuration information of the second LTM candidate cell, the method further comprises:
receiving the first RRM measurement configuration information transmitted from the network side.

30. A network device, comprising a memory, a transceiver, and a processor, wherein
the memory is used for storing a computer program; the transceiver is used for receiving and transmitting data under control of the processor; and the processor is used for reading the computer program in the memory and performing the following operations:
transmitting, to a terminal, RRM configuration information of a first layer 1/layer 2 (L1/L2)-triggered mobility (LTM) candidate cell and/or first RRM measurement configuration information,
wherein the RRM configuration information of the first LTM candidate cell and/or the first RRM measurement configuration information is used for the terminal to determine RRM configuration information of the second LTM candidate cell, wherein the RRM configuration information of the second LTM candidate cell is used for the terminal to perform an RRM measurement in a target candidate cell after LTM.

31. The network device according to claim 30, wherein the first RRM measurement configuration information comprises any of the following:
reference RRM measurement configuration information; or
an RRM measurement configuration pool.

32. The network device according to claim 31, wherein the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

33. The network device according to claim 32, wherein, in case that the RRM configuration information of the first LTM candidate cell is used to modify the RRM measurement configuration information of the current serving cell, the RRM configuration information of the first LTM candidate cell comprises any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

34. The network device according to claim 32, wherein the RRM configuration information of the first LTM candidate cell comprises a delta configuration parameter for generating the RRM configuration information of the second LTM candidate cell .

35. The network device according to claim 34, wherein the delta configuration parameter comprises any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

36. The network device of any according to claims 31 to 35, wherein the reference RRM measurement configuration information comprises:
fixed RRM measurement configuration information transmitted from a network side; or
RRM measurement configuration information of a current serving cell when the terminal receives the RRM configuration information of the first LTM candidate cell .

37. The network device according to claim 31 or 32, wherein the RRM measurement configuration pool comprises any one of the following or a combination thereof:
configuration information for at least one measurement identifier (ID);
configuration information for at least one measurement object; or
configuration information for at least one reporting configuration.

38. The network device according to claim 32, wherein the first LTM candidate cell configuration information used to determine the RRM configuration information of the second LTM candidate cell in the RRM measurement configuration pool comprises any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

39. An apparatus for configuring radio resource management (RRM) measurement, for use in a terminal, comprising:
a first receiving unit, used for receiving RRM configuration information of a first layer 1/layer 2 (L1/L2)-triggered mobility (LTM) candidate cell transmitted from a network side; and
a first determining unit, used for determining, based on the RRM configuration information of the first LTM candidate cell and/or first RRM measurement configuration information, RRM configuration information of a second LTM candidate cell, wherein the RRM configuration information of the second LTM candidate cell is used for the terminal to perform an RRM measurement in a target candidate cell after LTM.

40. The apparatus according to claim 39, wherein the first RRM measurement configuration information comprises any of the following:
reference RRM measurement configuration information; or
an RRM measurement configuration pool.

41. The apparatus according to claim 40, wherein the first determining unit is used for determining, based on the RRM configuration information of the first LTM candidate cell, RRM measurement configuration information of a current serving cell as the RRM configuration information of the second LTM candidate cell; or
the first determining unit is used for updating, based on the RRM configuration information of the first LTM candidate cell, RRM measurement configuration information of a current serving cell to obtain the RRM configuration information of the second LTM candidate cell; or
the first determining unit is used for generating, based on the RRM configuration information of the first LTM candidate cell and the reference RRM measurement configuration information, the RRM configuration information of the second LTM candidate cell; or
the first determining unit is used for determining, based on the RRM configuration information of the first LTM candidate cell, the RRM configuration information of the second LTM candidate cell in the RRM measurement configuration pool.

42. The apparatus according to claim 41, wherein, in case that the first determining unit is used for updating, based on the RRM configuration information of the first LTM candidate cell, the RRM measurement configuration information of the current serving cell, the RRM configuration information of the first LTM candidate cell includes any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

43. The apparatus according to claim 41, wherein the first determining unit is used for generating, based on a delta configuration parameter in the RRM configuration information of the first LTM candidate cell and the reference RRM measurement configuration information, the RRM configuration information of the second LTM candidate cell .

44. The apparatus according to claim 43, wherein the delta configuration parameter comprises any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

45. The apparatus of any according to claims 40 to 44, wherein the reference RRM measurement configuration information comprises:
fixed RRM measurement configuration information transmitted from the network side; or
RRM measurement configuration information of a current serving cell when the terminal receives the RRM configuration information of the first LTM candidate cell .

46. The apparatus according to claim 40 or 41, wherein the RRM measurement configuration pool comprises any one of the following or a combination thereof:
configuration information for at least one measurement identifier (ID);
configuration information for at least one measurement object; or
configuration information for at least one reporting configuration.

47. The apparatus according to claim 46, wherein the first LTM candidate cell configuration information comprises any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

48. The apparatus of any according to claims 39-44, wherein the first receiving unit is further used for:
receiving the first RRM measurement configuration information transmitted from the network side.

49. An apparatus for configuring radio resource management (RRM) measurement, for use in a network side, comprising:
a second transmitting unit, used for transmitting, to a terminal, RRM configuration information of a first layer 1/layer 2 (L1/L2)-triggered mobility (LTM) candidate cell and/or first RRM measurement configuration information,
wherein the RRM configuration information of the first LTM candidate cell and/or the first RRM measurement configuration information is used for the terminal to determine RRM configuration information of the second LTM candidate cell, wherein the RRM configuration information of the second LTM candidate cell is used for the terminal to perform an RRM measurement in a target candidate cell after LTM.

50. The apparatus according to claim 49, wherein the first RRM measurement configuration information comprises any of the following:
reference RRM measurement configuration information; or
an RRM measurement configuration pool.

51. The apparatus according to claim 50, wherein the RRM configuration information of the first LTM candidate cell is used to determine RRM measurement configuration information of a current serving cell as the RRM configuration information of the second LTM candidate cell; or
the RRM configuration information of the first LTM candidate cell is used to update RRM measurement configuration information of a current serving cell to obtain the RRM configuration information of the second LTM candidate cell; or
the RRM configuration information of the first LTM candidate cell is used to generate the RRM configuration information of the second LTM candidate cell; or
the RRM configuration information of the first LTM candidate cell is used to determine the RRM configuration information of the second LTM candidate cell in the RRM measurement configuration pool.

52. The apparatus according to claim 51, wherein, in case that the RRM configuration information of the first LTM candidate cell is used to modify the RRM measurement configuration information of the current serving cell, the RRM configuration information of the first LTM candidate cell comprises any one of the following or a combination thereof:
identification information of a candidate cell;
measurement gap configuration information;
a threshold for special primary cell (SpCell) reference signal received power (RSRP) measurement;
measurement quantity configuration information;
measurement gap sharing configuration information; or
inter-frequency gap configuration information;
measurement identifier (ID) identification information;
measurement identifier (ID) operation indication information;
a measurement identifier (ID) parameter value;
measurement object identification information;
measurement object operation indication information;
a measurement object parameter value;
reporting configuration identification information;
reporting configuration operation indication information; or
a reporting configuration parameter value.

53. The apparatus according to claim 51, wherein the RRM configuration information of the first LTM candidate cell comprises a delta configuration parameter for generating the RRM configuration information of the second LTM candidate cell .

54. The apparatus according to claim 53, wherein the delta configuration parameter comprises any one of the following or a combination thereof:
identification information of a candidate cell;
an information list of measurement identifiers (IDs) to add or modify;
an information list of measurement identifiers (IDs) to release;
an information list of measurement objects to add or modify;
an information list of measurement objects to release;
an information list of reporting configurations to add or modify;
an information list of reporting configurations to release;
measurement gap configuration information;
a threshold for special primary cell (SpCell) reference signal received power (RSRP) measurement;
measurement quantity configuration information;
measurement gap sharing configuration information; or
inter-frequency gap configuration information.

55. The apparatus of any according to claims 50 to 54, wherein the reference RRM measurement configuration information comprises:
fixed RRM measurement configuration information transmitted from the network side; or
RRM measurement configuration information of a current serving cell when the terminal receives the RRM configuration information of the first LTM candidate cell .

56. The apparatus according to claim 50 or 51, wherein the RRM measurement configuration pool comprises any one of the following or a combination thereof:
configuration information for at least one measurement identifier (ID);
configuration information for at least one measurement object; or
configuration information for at least one reporting configuration.

57. The apparatus according to claim 51, wherein the first LTM candidate cell configuration information used to determine the RRM configuration information of the second LTM candidate cell in the RRM measurement configuration pool comprises any one of the following or a combination thereof:
identification information of a candidate cell;
measurement ID information needed to be measured;
measurement ID information not needed to be measured;
ID information for a measurement object needed to be measured;
ID information for a measurement object not needed to be measured;
ID information for a reporting configuration needed to be measured; or
ID information for a reporting configuration not needed to be measured.

58. A processor-readable storage medium, storing a computer program, wherein the computer program is used to cause a processor to perform the method according to claims 1 to 10 or the method of any according to claims 11 to 19.
